# EUROPEAN PATENT APPLICATION

(11) **EP 1 505 835 A1**
(43) Date of publication of application: **09.02.2005**
(21) Application number: 04103777.1
(22) Date of filing: 05.08.2004
(51) Int. Cl.: H04N 7/173

(54) **An Entertainment System**

(30) Priority: 06.08.2003 KR 2003054483
(71) Applicant: SAMSUNG ELECTRONICS CO., LTD., Suwon-City, Kyungki-do (KR)
(72) Inventor: KANG, Yong-jin 324-704, Cheonmyeong-maeul Samik, Gyeonggi-do (KR); LEE, Hyung-tae 526, Jinsan-maeul Samsung 5th, Gyeonggi-do (KR); HEO, Yang-mu 103, 990-20, Yeongtong-dong,, Gyeonggi-do, (KR)
(74) Representative: Read, Matthew Charles

(57) **Abstract**

Disclosed is a digital entertainment system which can receive, store and reproduce multimedia data such as broadcasts, provide diverse communication interfaces, and exchange and share data with external appliances connected thereto. In the network printer control system, an audio and video (A/V) signal processing part receives external broadcasting signals, and outputs digital data obtained through a process of channel selection and demodulation of the broadcasting signal. A data over cable service interface specification (DOCSIS) and out of band (OOB) processing part provides a communication interface according to a DOCSIS standard and for an OOB service. An MPEG processing part generates standard video signals by decoding input data by a predetermined method, and outputs the generated standard video signals to any external appliances, and a system bus communicably connects the signal processing part, the DOCSIS/OOB processing part and the MPEG processing part. A control part, communicably connected to the system bus, controls an operation of the A/V signal processing part and the MPEG processing part and performs a communication through the DOCSIS and OOB processing part.

## Description

The present invention relates to a hub apparatus.

Today, information content platforms within the home may share information. This means that stand-alone products and services form interdependent connections with one another. As wide bandwidth connections increase, users at home can connect various kinds of hardware and devices to the Internet. This increases the levels of connectivity. This forms the foundation for various kinds of content. In other words, many kinds of applications can be shared between devices within the home, as well as using the devices independently of one another. Users can therefore enjoy entertainment through their wide bandwidth connections to the Internet, and easily use various kinds of services.

As the information content platforms within the home are increasingly become high-level, the necessity for an integrated product combining a communication platform, a computer, an audio and video device, and the like, is increasing. To meet this necessity, a home entertainment system has been proposed integrating such products. The home entertainment system has extended the functionality of the basic set top box, and can store, manage and reproduce multimedia content such as television signals and multimedia content produced at home such as home videos, photographs, and so on. Accordingly, the home entertainment system may be thought of as a home multimedia server.

However, existing home entertainment systems have limitations in providing integrated connectivity between information platforms, audio and video devices, digital devices, and so on within the home. Also, existing home entertainment systems have very limited ability to exchange or share multimedia content with devices located around the home, and particularly with the audio and video devices. In order to overcome the limitations described above, a home server utilising a home network is required, but a home server has not yet been commercialized for use in the home.

Also, the proliferation of new digital display devices such as projectors that can be used as home cinemas, plasma displays that are wall mountable televisions, rear projection televisions, and the like, have increasingly been replacing existing analogue cathode ray tube televisions. Accordingly, it is necessary to provide a digital entertainment system based on digital compatibility between devices which can enhance the audio and video functionality of existing home entertainment systems, provide a communication interface between different devices which are not located close to one another, and facilitate the exchange or sharing of the multimedia data/content in association with such new display devices.

Accordingly, it is an aspect of the present invention to provide a digital entertainment system which can receive, store and reproduce multimedia data such as broadcasts, and provide a communications interface with a variety of external appliances.

According to the present invention, there is provided a hub apparatus for a distributed entertainment system, the hub apparatus comprising a broadcast medium receiver, a transmitter for locally retransmitting the content of signals received by said receiver, and remote data communication means for data communication with remote devices outside of a system in which the hub apparatus is employed.

"Broadcast signals" may include digital or analogue television signals, cable television signal, and/or radio signals either transmitted on a digital television channel or by other means.

This is advantageous because it enables many devices to enjoy television and/or radio around the house. Only the hub apparatus needs to be able to receive the broadcast signals. Moreover, the devices can also access the Internet easily.

An embodiment of the present invention will now be described, by way of example only, with reference to the accompanying drawings, in which:
Figure 1 is a view illustrating the exterior of a digital entertainment system according to an embodiment of the present invention;
Figure 2 is a view illustrating an example of an operational environment of a digital entertainment system according to an embodiment of the present invention;
Figure 3 is a view illustrating a digital entertainment system connected to external appliances according to an embodiment of the present invention;
Figure 4 is a block diagram of a digital entertainment system according to an embodiment of the present invention; and
Figure 5 is a detailed block diagram of a digital entertainment system according to an embodiment of the present invention.

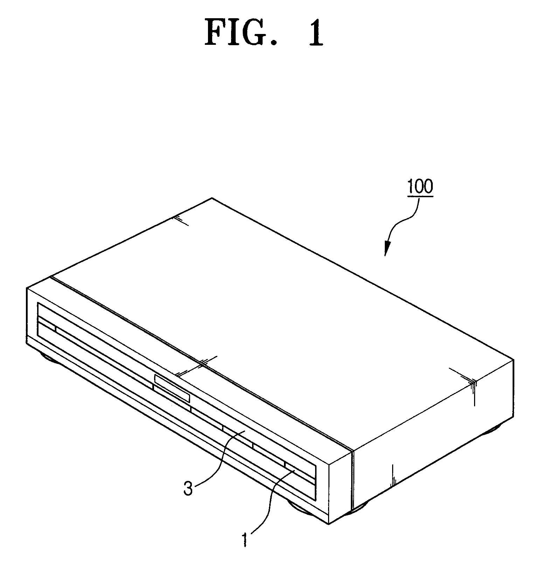

Referring to Figure 1, a digital entertainment system 100 according to an embodiment of the present invention has an overall shape similar to an existing DVD player. Further, the digital entertainment system 100 has a manipulation switch 1 for controlling the operation of the system and a display 3 for displaying operation-related information. Both the manipulation switch 1 and the display are mounted on the front side of the system. The the digital entertainment system 100 is controlled through a remote controller (not shown) or an external appliance connected thereto in addition to the manipulation switch 1. Although not illustrated in the drawing, connection terminals for connecting the digital entertainment system 100 to external appliances such as a television receiver (TV), a computer, or the like, are located on the rear side of the system 100.

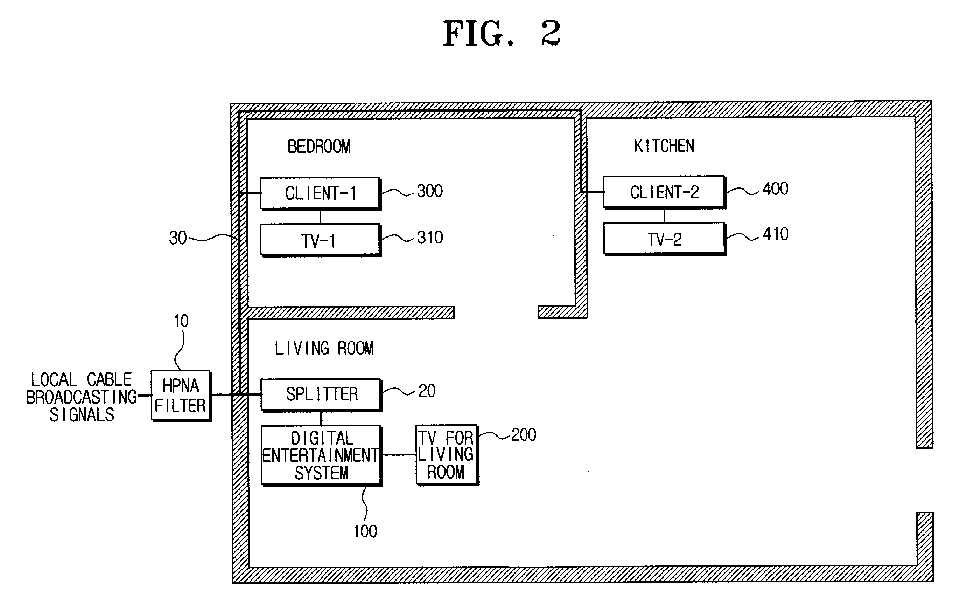

Referring to Figure 2, the digital entertainment system 100 according to an embodiment of the present invention is installed in the living room of a house. Signals provided by a local cable broadcasting agent are input to the digital entertainment system 100 through a Home Phone Networking Alliance (HPNA) filter 10 and a splitter 20. The living room TV 200 is connected to the digital entertainment system 100. The HPNA filter 10, which is installed by the local cable broadcasting agent, is used to provide the broadcast signal only to the home that is under contract with the local cable broadcasting agent. The splitter 20 is used for signal distribution.

A client-1 300 is installed in a bedroom, and a TV-1 310 is connected to the client-1 300. A client-2 400 is installed in the kitchen, and a TV-2 410 is connected to the client-2 400. Low-priced equipment that is incompatible with some of the functions of the digital entertainment system 100 may be used as the client-1 300 or the client-2 400. It is possible for the client-1 300 and the client-2 400 to share multimedia content stored in the digital entertainment system 100 through a transmission line such as a telephone line within the dwelling. Of course, the locations of client-1 and client-2 are exemplary. Client-1 and client-2 may be located anywhere within the dwelling as desired by the user.

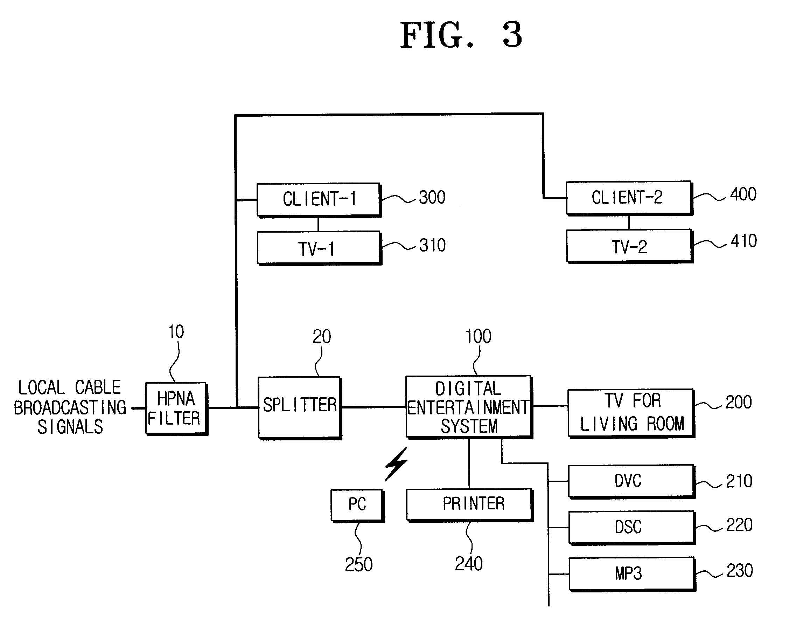

Referring to Figure 3, in addition to the TV for the living room 200, a Digital Video Camera (DVC) 210, a Digital Still Camera (DSC) 220, an MP3 device 230, and so on, are connectable to the digital entertainment system 100 using an IEEE 1394 or Universal Serial Bus (USB) interface. A printer 240 can be connected to the digital entertainment system through the USB interface. Also, the digital entertainment system 100 can communicate with a PC 250 by a wireless communication such as a Wireless LAN (WLAN) and so on. The digital entertainment system 100 can transmit and receive both data and control signals to and from client-1 300 and client-2 400 through the splitter 20.

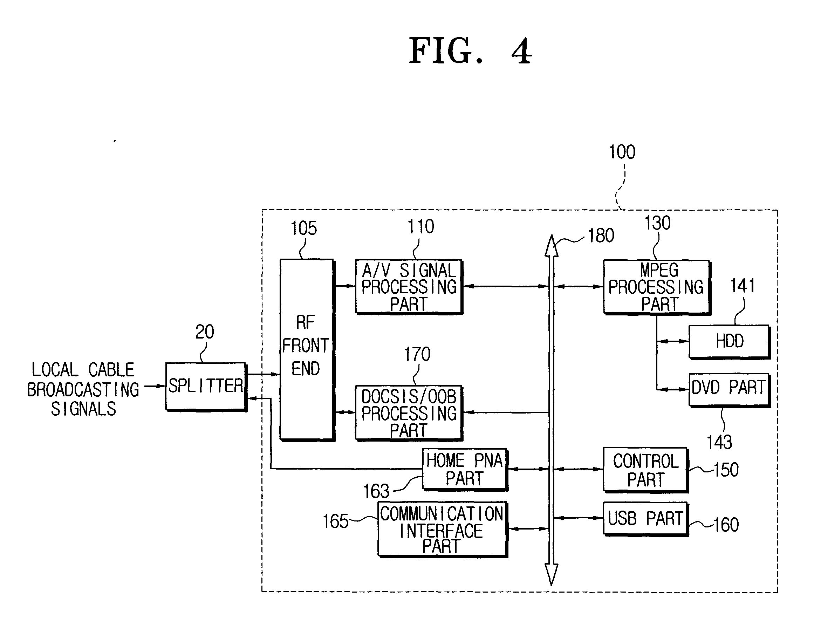

Referring to Figure 4, the digital entertainment system 100 according to an embodiment of the present invention is provided with an RF front end 105, an A/V signal processor 110, an MPEG processor 130, a Hard Disc Drive (HDD) 141, a DVD 143, a controller 150, a USB port 160, a home PNA part 163, a communication interface 165, and a DOCSIS/OOB processor 170, which communicate with one another using a system bus 180.

The RF front end 105 distributes broadcast signals input through the splitter 20 to the A/V signal processor 110 and the DOCSIS/OOB processor 170, and transfers signals output from the DOCSIS/OOB processor 130 to the external devices.

The A/V signal processor 110 is preferably provided with two digital tuners and two analog tuners. The A/V signal processor 110 selects a channel desired by a user from among the channels of the input broadcast signals, and outputs digital data generated by demodulating the signal of the selected channel through the system bus 180.

The MPEG processor 130 generates standard video signals by decoding the data input through the system bus 180, an example of which is MPEG. Also, the MPEG processor 130 stores the data input through the system bus 180 in the HDD 141, or it generates the standard video signals by decoding the data loaded from the HDD 141 or the DVD 143. The standard video signals generated by the MPEG processor 130 are output to the external device using the connection terminals.

The HDD 141 is used as the storage medium for storing the data compressed (or encoded) by the MPEG processor 130. By using the HDD 141 as the storage medium, instead of a magnetic tape, Personal Video Recorder (PVR) functionality can be provided. The PVR functionality allows programs transmitted from broadcast stations to be stored and then viewed after a predetermined time. The PVR functionality also facilitates the search for, or the editing of, a desired part of the stored broadcast programs. Moreover, it enables scheduled recordings by receiving the latest broadcasting schedule from time to time. Further, the PVR functionality enables simultaneous recording of several programs, whilst also allowing an instantaneous stop or a repeated review of a scene which happened several seconds to several minutes ago during a live broadcasting. This is sometime referred to as the "time-shifting function". The above features allow interactive viewing of the broadcasts in association with the broadcasting agent.

The DVD 143 performs a reading operation of the data recorded on a Digital Video Disc (DVD) and so functions as a general DVD player. The DVD 143 may record data on, and reproduce data from, various recording media such as a CD, VCD, CD-R, etc., in addition to DVDs.

The USB port 160 is a kind of serial port, and provides a USB interface having plug and play functionality. One USB port can accommodate up to 127 diverse external devices. The USB port 160 accommodates devices that require high-speed transmission such as a scanner, a video device and a printer. Likewise, devices that require a relatively low-speed transmission such as a keyboard, a joystick, a mouse, and so on, can also be connected to the USB port.

The home PNA part 163 provides a home PNA interface. The Home PNA enables data transmission in a frequency band outside that of an audio signal using the existing phone line. Preferably, using the existing phone line, the home PNA enables communication among two or more devices without installing a separate cable or hub, and makes it possible for the devices to share resources such as the hard disc and the printer. The home PNA interface provided by the home PNA part 163 enables the exchange and sharing of data between the digital entertainment system and the client.

The communication interface 165 provides a wireless communication interface such as WLAN or Bluetooth, or an IEEE 1394 interface. The IEEE 1394 interface supports the plug and play functionality in the same manner as the USB port, and one port can accommodate up to 53 devices.

The DOCSIS/OOB processor 170 provides an interface complying with the DOCSIS standard and an interface for an OOB service. The DOCSIS means the modem standard for a cable modem prepared by Multimedia Cable Network System partners (MCNS). The modulation type used in the DOCSIS may be a 64/256 quadrature amplitude modulation (QAM) and a quadrature phase shift keying (QPSK) / 16QAM.

The system bus 180 connects the A/V signal processor 110, the MPEG processor 130, the controller 150, the USB part 160, the home PNA part 163, and the communication interface 165. A Peripheral Component Interconnect (PCI) bus may be used as the system bus 180. The control part 150 controls the operation of and runs the application programs for the digital entertainment system 100

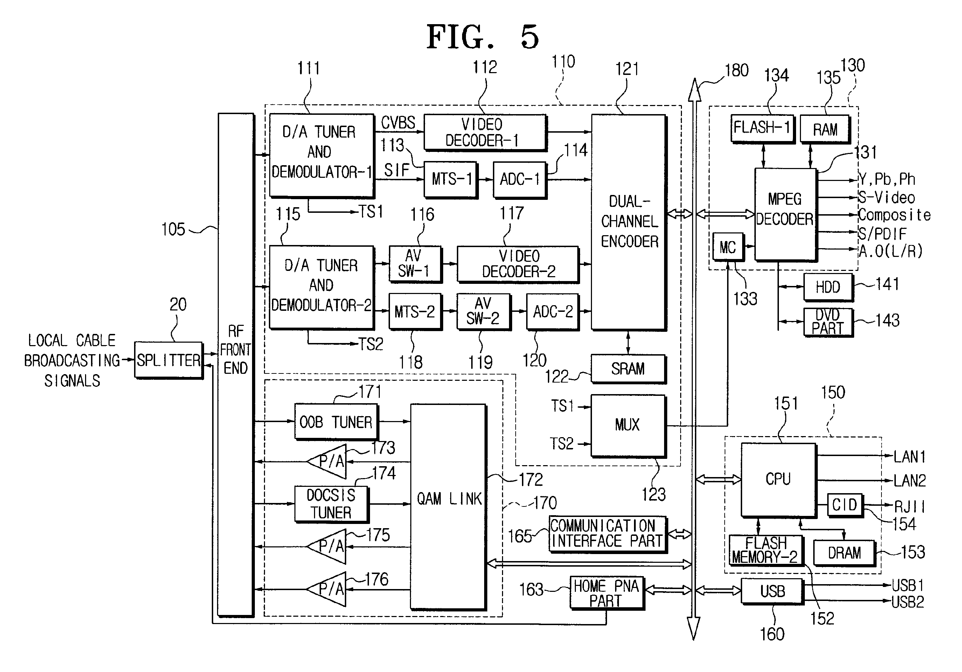

Referring to Figure 5, the same reference numerals are used to refer to the same parts as those in Figure 4. The A/V signal processor 110 includes digital/analogue (D/A) tuner and demodulator-1 111, a video decoder-1 112, a Multi Television System (MTS)-1 113, an analogue-to-digital converter (ADC)-1 114, D/A tuner and demodulator-2 115, an A/V switch-1 116, a video decoder-2 117, an MTS-2 118, an A/V switch-2 119, an ADC-2 120, a dual-channel encoder 121, an SRAM 122 and a multiplexer (MUX) 123.

The D/A tuner and demodulator-1 111 is provided with a digital tuner and an analogue tuner. The D/A tuner and demodulator-1 111 selects a channel desired by the user from amongst the input broadcast channel signals. The selected channel is then demodulated. Using the D/A tuner and demodulator-1 111, a Color, Video, Burst and Sync (CVBS) signal and a Source or Standard Input Format (SIF) signal are output, and a transport stream (TS) signal TS1 is output through the digital tuner. The transport stream is one of the multiplexing methods prescribed in MPEG-2, which is defined for an environment where a transmission error such as a noise error or data loss may occur.

The video decoder-1 112 receives the composite CVBS signal output from the D/A tuner and demodulator-1 111 and analyzes the information about the compressed sequential scenes stored therein as a video packet. The video decoder-1 112 transfers the CVBS signal to the dual-channel encoder 121 in a signal format, the size of which matches a TV screen that may have a different resolution. The video decoder-1 112 supports still picture functionality, and thus can preferably be used for interactive TV advertisements. The MTS-1 113 receives the SIF signal from the D/A tuner and demodulator-1 111, and separates a multi-voice signal from the SIF signal. The ADC-1 114 converts the analog signal output from the MTS-1 113 into a digital signal, and transfers the digital signal to the dual-channel encoder 121.

The D/A tuner and demodulator-2 115, the video decoder-2 117, the MTS-2 118 and the ADC-2 120 have the same functions as the D/A tuner and demodulator-1 111, the video decoder-1 112, the MTS-1 113 and the ADC-1 114, respectively. Also, the A/V switch-1 116 and the A/V switch-2 119 are used to change the A/V connection terminal installed at the rear of the system to the A/V connection terminal installed on the front side of the system, and vice versa. By providing a plurality of tuners that operate independently, it is possible to simultaneously select and view different broadcasts, or to store the contents of one broadcast signal while viewing another broadcast signal.

The dual-channel encoder 121 encodes the input signal, and transfers the encoded signal to the MPEG decoder 131 through the system bus 180. The SRAM 122 stores and outputs the data required for the operation of the dual-channel encoder 121.

The TS1 signal output from the D/A tuner and demodulator-1 111 and the TS2 signal output from the D/A tuner and demodulator-2 115 are transferred to the MUX 123. The MUX 123 selectively transfers one of the TS1 and TS2 signals to an MC 133.

The MPEG processing part 130 includes an MPEG decoder 131, the MC 133, a flash-1 134 and RAM 135. The MPEG decoder 131 decodes the signal input through the system bus 180 preferably according to the MPEG-2 method. The MPEG decoder 131 preferably generates a variety of standard video signals such as Y/Pb/Pr, S-video, composite, S/PDIF, and the like. Also, the MPEG decoder 131 stores the data input through the system bus 180 in the HDD 141, and generates the standard video signals by expanding the compressed data stored on the HDD 141. In addition, the MPEG decoder 131 may generate the standard video signals by decoding the data read out from the DVD 143. The standard video signals generated by the MPEG decoder 131 are output to the external devices through the connection terminal, and are displayed on a display device connected to the connection terminal. The MC 133, which is a kind of descrambler well known in the art, descrambles the scrambled signal and transfers the descrambled signal to the MPEG decoder 131. The flash-1 134 and the RAM 135 preferably store programs required for the operation of the MPEG decoder 131 and data.

The control part 150 is provided with a CPU 151, a flash memory-2 152, a DRAM 153 and a Caller ID (CID) 154. The CPU 151 performs an initialization process and runs application programs through the system bus 180, and controls the operation of the digital entertainment system 100. A processor with a 64-bit MIPS architecture that provides a LAN interface may be used as the CPU 151.

The flash memory-2 152 and the DRAM 153 are used as processor memories required for the operation of the CPU 151. The flash memory-2 152 is preferably a flash memory that can erase or correct data in the unit of a data block. An Operating System (OS) and the like can preferably be downloaded to the flash-2 152 whenever an upgrade of the OS stored on the flash memory-2 152 is required.

The CID 154 provides an interface related to a caller display service for displaying the phone number of the caller on a telephone or a display terminal of the receiver before the call. The output of the CID 154 is preferably applied to an RJ11 phone jack.

The DOCSIS/OOB processor 170 includes an OOB tuner 171, a QAM link 172, a DOCSIS tuner 174 and power amplifiers (P/A) 173, 174 and 176.

The DOCSIS tuner 171 provides an interface complying with the DOCSIS standard. The OOB tuner 174 provides an interface for facilitating data transmission to an OOB service provider to enable a series of interactive services, and preferably uses a frequency band of 100 to 350 MHz. The QAM link 172 performs data link control with respect to a QAM-modulated signal output through the DOCSIS tuner 171 and the OOB tuner 174. The power amplifiers 173, 174 and 176 are used to amplify signals transferred to any external appliances or devices.

According to an embodiment of the present invention of the above-described construction, several broadcast signals are simultaneously received and reproduced through the A/V signal processing part 110, or stored on the HDD 141. The stored data can be exchanged and shared with the clients or the external appliances through the home PNA 163. Also, the Internet or the OOB service can be used through the DOCSIS/OOB processing part 170, and the data can be exchanged and shared with the external appliances through the USB port 160, the home PNA part 163, the communication interface 165, and the like.

As described above, the digital entertainment system according to the embodiments of the present invention is preferably provided with a plurality of tuners, which enables the simultaneous viewing of several broadcast signals, or the storing of one broadcast signal on a storage medium while viewing another broadcast signal. Also, the digital entertainment system according to an embodiment of the present invention can provide a Personal Video Recorder (PVR) function using a hard disc as a storage medium. Also, the digital entertainment system according to an embodiment of the present invention can reproduce the data stored on a variety of recording media such as DVD and so on. Additionally, the digital entertainment system 100 can exchange and share the stored multimedia data with clients using existing phone lines through the home PNA 163. A separate line is not required to be provided. Also, the digital entertainment system 100 according to an embodiment of the present invention can exchange and share the data with a variety of external appliances by providing communication interfaces for the external devices.

## Claims

1. A hub apparatus (100) for a distributed entertainment system, the hub apparatus comprising:
a broadcast medium receiver (105);
a transmitter (130) for locally retransmitting the content of signals received by said receiver (105); and
remote data communication means (170) for data communication with remote devices outside of a system in which the hub apparatus (100) is employed.

2. An apparatus according to claim 1, including local data communication means (163) for data communication with local apparatuses comprised in a system in which the hub apparatus (100) is employed.

3. A distributed entertainment system, comprising:
a hub apparatus (100) according to claim 2; and
a local apparatus configured to receive locally retransmitted signals and to communicate data with said hub apparatus.

4. A digital entertainment system comprising:
an audio video (A/V) signal processing part for receiving external broadcast signals, and outputting digital data obtained through a process of channel selection and demodulation of the broadcasting signal;
a data over cable service interface specification (DOCSIS) and out of band (OOB) processing part for providing a communication interface according to a DOCSIS standard and an interface for an OOB service;
an MPEG processing part for generating standard video signals by decoding input data by a predetermined method, and outputs the generated standard video signals to at least one external appliance;
a system bus for communicably connecting the A/V signal processing part, the DOCSIS and OOB processing part and the MPEG processing part; and
a control part, communicably connected to the system bus, for controlling the operation of the A/V signal processing part, the MPEG processing part, and performing communications through the DOCSIS/OOB processing part.

5. The digital entertainment system as claimed in claim 4, further comprising a communication part, communicably connected to the system bus, for providing an interface for communication between said control part and said external appliances.

6. The digital entertainment system as claimed in claim 5, wherein the communication part includes at least one of a universal serial bus (USE), a home PNA, a wireless LAN (WLAN) and an RS-232C interface.

7. The digital entertainment system as claimed in claim 4, further comprising a storage medium for storing data;
wherein the MPEG processing part stores the input data on the storage medium, generates the standard video signals by reading the data stored in the storage medium and decoding the readout data by a predetermined method.

8. The digital entertainment system as claimed in claim 7, wherein the storage medium is a hard disc drive.

9. The digital entertainment system as claimed in claim 4, further comprising a DVD part for recording and reading data on a recording medium;
wherein the MPEG processing part generates the standard video signals by decoding the data outputted from the DVD part by said predetermined method.

10. The digital entertainment system as claimed in claim 9, wherein the recording medium includes a DVD, a VCD, a CD and a CD-R.

11. The digital entertainment system as claimed in claim 4, wherein the standard video signal is selected from the group of signal formats consisting of Y/Pb/Pr, S-video, composite and S/PDIF.

12. The digital entertainment system as claimed in claim 4, wherein the predetermined method is an MPEG-2 decoding method.

13. The digital entertainment system as claimed in claim 4, wherein the A/V signal processing part comprises a plurality of analog tuners for selecting different channels from the external broadcasting signals, respectively, and digital tuners.

14. The digital entertainment system as claimed in claim 4, wherein the MPEG processing part comprises:
an MPEG decoder for generating the standard video signals by decoding the input signal by the predetermined method;
an MC part for descrambling a scrambled signal outputted from the A/V signal processing part, and transferring a descrambled signal to the MPEG decoder; and
a memory for storing data and a program required for an operation of the MPEG decoder and the data.

15. The digital entertainment system as claimed in claim 4, wherein the control part comprises a processor, a processor memory for storing data and a program required for an operation of the processor and the data, and a caller ID (CID) part for providing an interface related to a caller display service.

16. The digital entertainment system as claimed in claim 4, wherein the processor is a processor of an MIPS architecture that provides a LAN interface.

17. The digital entertainment system as claimed in claim 4, wherein the system bus may be a peripheral component interconnect (PCI) bus.

18. A digital entertainment method comprising the steps of:
receiving external broadcast signals by an audio/video (A/V) signal processing part that outputs digital data obtained through a process of channel selection and demodulation of said broadcasting signals;
providing a communication interface according to a data over cable service interface specification (DOCSIS) and out of band (OOB) processing part for a DOCSIS standard and an interface for an OOB service;
generating standard video signals by decoding input data by a predetermined method, and sending the generated standard video signals to at least one external appliance or device;
communicably connecting the A/V signal processing part, the DOCSIS and OOB processing part and the MPEG processing part to a system bus; and
controlling the operation of the A/V signal processing part, the MPEG processing part, and performing communications through the DOCSIS/OOB processing part through a control part, communicably connected to the system bus.

19. The method according to claim 18, further comprising:
providing an interface for communication between the control part and external appliances.

20. The method according to claim 18, wherein the generating step further comprises:
storing the input data on a storage medium;
reading the data stored on the storage medium; and
generating standard video signals by decoding the readout data by a predetermined method.
